# EUROPEAN PATENT SPECIFICATION

(11) **EP 2 034 577 B1**
(45) Date of publication and mention of the grant of the patent: **19.05.2010**
(21) Application number: 08163399.2
(22) Date of filing: 01.09.2008
(51) Int. Cl.: H02G 3/04, F16L 3/10

(54) **A system for detachably connecting one or more first sections between two or more connecting parts of one or more second sections**
System zum ablösbaren Verbinden eines oder mehrerer erster Abschnitte zwischen zwei oder mehr Verbindungsteilen von einem oder mehreren zweiten Abschnitten
Système pour relier de manière amovible une ou plusieurs premières sections de deux pièces de connexion ou plus d'une ou de plusieurs deuxièmes sections

(30) Priority: 06.09.2007 BE 200700433
(43) Date of publication of application: 11.03.2009
(73) Proprietor: Mahieu, Jan Emiel Werner, 8790 Waregem (BE)
(72) Inventor: Mahieu, Jan Emiel Werner, 8790 Waregem (BE)
(74) Representative: Ostyn, Frans

(56) References cited:
- EP-A- 0 607 083
- AU-A- 2 536 971
- DE-A1- 2 109 614
- DE-U1- 7 701 076
- US-A- 312 644

## Description

The invention relates to a system for detachably connecting one or more first sections between two or more connecting parts of one or more second sections, in which the detachable connection between the abovementioned one or more first sections and the abovementioned two or more connecting parts is made resilient, in which the one or more first sections are provided on both sides in the longitudinal direction with a first insertion rib, and in which the two or more connecting parts of the one or more second sections are provided in the longitudinal direction with a second insertion rib and a second stop rib as second ribs which together form a second groove, the first insertion ribs fitting into the second grooves to form the connection, and in which at least partially resilient material is provided between the one or more first sections and the two or more connecting parts of the one or more second sections.

Such systems are known, inter alia for detachably connecting a cover section as the first section between the two connecting parts of a channel-shaped section as the second section in cable ducts. Various types of connections are known for detachably connecting a cover section between two connecting parts of a channel-shaped section.

First, a cover section can be fixed on the channel-shaped section by means of screws. The fitting and the removal of the cover section do require the use of tools, and it is necessary to have some space to be able to handle the tools. Screwing the cover section onto the channel-shaped section is therefore, on the one hand, a laborious fitting procedure, while such a connection, on the other hand, is difficult to achieve where the sections are awkward to reach, such as, for example in cupboards, shelving, canopies, alcoves etc.

Furthermore, the cover section can be slid into grooves in the connecting parts of the channel-shaped section, these grooves encompassing the width of the cover section. However, if cable ducts have to be laid by the running metre, sliding the various parts (cover section and channel-shaped section) into each other is a laborious fitting procedure, in which a fair amount of space is required for fitting these parts. In order to ensure that the channel-shaped section is adequately closed off by the cover section, the cover section must in fact be inserted into the channel-shaped section in the longitudinal direction. Moreover, the detachability of the connection becomes limited or impossible if such a cable duct has to be fitted somewhere in between.

On the other hand, various types of snap connections are known. In the case of each of these snap connections the cover section is provided with projecting snap elements extending transversely to the cover section. By exerting a lateral pressure, these snap elements can then either be snapped into grooves in the connecting parts of the channel-shaped section, as disclosed in DE 77 01 076 and EP 0 607 083, or they can be snapped at least partially behind projecting parts of the connecting parts of the channel-shaped section, as is the case, for example, in cable ducts such as those disclosed in EP 1 414 125, FR 2 835 036 and DE 21 09 614. Owing to the fact that PVC, the material of which cable ducts is usually made, is slightly elastic, and owing to the fact that when the cover section is being snapped into the connecting parts of the channel-shaped section at least the vertical sides of the channel-shaped section have to deflect outwards, it can be said that such snap connections are made resilient.

A disadvantage of this snap connection is, however, that because of the tolerances occurring, for cable ducts by the running meter it is extremely difficult to achieve a detachable connection which, on the one hand, seals sufficiently and does not simply come off as a result of changing tolerances during use, or of wear, different degrees of expansion resulting from slight material differences or as a result of a temperature gradient etc., and which, on the other hand, does not connect up too tightly, thus preventing the connection from being detachable.

Leaving out of account the changing tolerances in the use of cable ducts, it is also already extremely difficult to produce elongated sections that remain within the desired tolerances to enable such a detachable snap connection to be achieved. During the production of long sections considerable measurement differences can already occur between the two ends of these sections. Some surface treatments can also cause a measurement increase, while, on the other hand, other surface treatments can cause a decrease in material.

In order to obtain a sufficiently tight connection despite such amounts of play, it is possible, as is disclosed in, for example, DE 77 01 076, or EP 0 607 083 or DE 21 09 614, to fit sealing elements which to some extent remove the play between the cover section and the connecting parts of the channel-shaped section. These sealing elements are preferably elastic, in order to take up the play as much as possible along the length of the cable duct.

A further disadvantage of PVC is that its service life is finite, through the fact that this material gradually becomes brittle. The elasticity of the material decreases, with the result that the snap connection no longer works. However, if an attempt is made to make such cable ducts of a more durable material, such as, for example, of an aluminium alloy, this increases the problems occurring with regard to the tolerances for achieving a desired snap connection, since this material per se is less elastic than PVC.

Yet another major disadvantage of such a connection is that, as stated above, the various parts have to deform elastically during the making of the connection. It is therefore not possible to fit the channel-shaped section in, for example, a wall or a desktop etc., where the channel-shaped section is surrounded by rigid material, since in that case the cover section cannot be fitted in the channel-shaped section by means of a snap connection, because the channel-shaped section can no longer deform in order to produce the connection.

The above outline of detachable connections in the case of cable ducts is not applicable to cable ducts alone, but can be extended to all possible section connections in which one or more first sections are fitted between two or more connecting parts of one or more second sections, as, for example, in the case of light fittings.

The object of this invention is therefore to provide a system for detachably connecting one or more first sections between two or more connecting parts of one or more second sections, in which the detachable connection can be fitted and removed without tools, in which the sections do not have to deform for the connection, and in which said detachable connection is sufficiently secure to provide the necessary shielding between the various sections, and yet is sufficiently loose to ensure the detachability of the connection.

This object of the invention is achieved by means of a system for detachably connecting one or more first sections between two or more connecting parts of one or more second sections, in which the detachable connection between the abovementioned one or more first sections and the abovementioned two or more connecting parts is made resilient, in which the one or more first sections are provided on both sides in the longitudinal direction with a first insertion rib, and in which the two or more connecting parts of the one or more second sections are provided in the longitudinal direction with a second insertion rib and a second stop rib as second ribs which together form a second groove, the first insertion ribs fitting into the second grooves to form the connection, and in which at least partially resilient material is provided between the one or more first sections and the two or more connecting parts of the one or more second sections, in which the one or more first sections are provided on both sides in the longitudinal direction with a first stop rib, which together with the first insertion rib as first ribs form a first groove, in which the second insertion ribs fit into the first grooves to form the connection, in which the first insertion ribs are made longer than the first stop ribs and the second insertion ribs are made shorter than the second stop ribs, and in which the abovementioned resilient connection is achieved by providing at least partially resilient material in the first grooves or the second grooves.

In this way when being inserted into the one or more second sections a first section can be taken along the second insertion ribs until past said second insertion ribs, in which case the first section can knock against the second stop ribs. When the first section is being inserted into the one or more second sections the first stop ribs then automatically prevent the first section from coming out of the one or more second sections. This advantage of such an embodiment is explained in greater detail in the description of a method for inserting a first section into one or more second sections.

The resilient material ensures, on the one hand, as in the prior art, that the detachable connection will close up sufficiently everywhere to ensure the necessary shielding between the various sections. On the other hand, this resilient material according to the invention ensures that the resilient action of the resilient connection is provided, and the resilient material ensures that the connection is detachable. Owing to the fact that the first insertion ribs are made longer than the first stop ribs and the second insertion ribs are made shorter than the second stop ribs, and the resilient material is provided in the first or the second grooves, thanks to the resilient material in the first or second grooves, the various sections no longer have to deform to bring about the connection. It therefore becomes possible, for example in the case of a cable duct, to install the channel-shaped section in rigid material, while it remains possible to fit the cover section detachably in the channel-shaped section. When such a connection is used for light fittings, it becomes possible to fit the latter in a wall to be plastered, in which case the plaster layer can be applied right up against the light fittings. This can be so because there is then no longer the risk of the plaster becoming damaged through deformation of the sections that form part of the light fittings.

The abovementioned resilient connection is preferably achieved by providing resilient material in the first or the second grooves in the longitudinal direction on both sides of the one or more first sections. In this way the one or more first sections are placed so as to be self-centring between the two or more connecting parts of the one or more second sections. Particularly where the sections are being placed so that they are visible, this produces a neat finish. In addition, the detachable connection can equally well be fitted or removed in the longitudinal direction on either side, so that no attention need be paid to possible constraints where one of the sides of the sections is less easy to reach.

Furthermore, the resilient material according to this invention consists preferably of a strip of elastic material. A good connection here depends on the density and on the quantity of elastic material that is placed in the longitudinal direction between the various sections. This density and quantity of elastic material that is placed in the longitudinal direction between the various sections can be adjusted experimentally until the desired properties (detachability, sufficiently secure) of the connection are obtained. In this way it is simple to ensure that the resilient design of the connection is produced uniformly over the full length of the sections, in which case both the sealing action of the connection and the detachability of the connection are therefore ensured over the full length. The resilient material could, however, equally well be a resilient element, such as, for example, a leaf spring.

Yet more preferably, the resilient material according to this invention is fixedly connected to one or more of the first sections or to one or more of the two or more connecting parts of the one or more second sections. This means that during the detachment of the connection the resilient material will not come out of the connection as well, with the result that said resilient material is less likely to be damaged or lost.

In a specific embodiment of a system for detachably connecting one or more first sections between two or more connecting parts of one or more second sections according to this invention, the resilient material is made of foamed or extruded material. In this way ventilation through the connection between the sections is possible. It can namely be desirable that the various sections remain thermally separate.

In order to ensure a heat-resistant connection, in another specific embodiment of a system for detachably connecting one or more first sections between two or more connecting parts of one or more second sections, according to this invention the resilient material is made on the basis of heat-resistant material, such as, for example, silicone.

Furthermore, the first insertion rib is preferably provided with a rounded head to enable it to be inserted smoothly into a second groove. The rounded head also ensures that resilient material situated in the corresponding second groove is compressed in all directions in conformity with this rounded head, so that uniform compression of this resilient material can be obtained. In this way the first section will be placed so that it is self-positioning or even self-centring in all directions.

In order to make it possible to insert one or more first sections into one or more second sections without said one or more first sections or said one or more second sections having to be deformed, in a most preferred embodiment according to this invention, the first ribs, the first grooves, the second ribs and the second grooves are designed in such a way that when the resilient material is pressed with the one side of a first section into a first or a second groove, said first section is rotatable relative to said first or second groove, so that the first ribs and the first grooves on the other side of said first section can be rotated past the second ribs.

Gripping means are preferably provided here for detaching the resilient connection.

In order to form said gripping means, in a further specific embodiment according to this invention, the first ribs of the one or more first sections can form an edge that is raised relative to the two or more connecting parts of the one or more second sections.

The object of this invention is achieved in one specific application with a system of the type described above which is used in a cable duct, and in another specific application with a system of the type described above which is used in a light fitting.

Finally, the object of this invention is also achieved by means of a method for connecting a first section between two connecting parts of one or more second sections, by means of a system of the type described above in the most preferred embodiment according to this invention, this method comprising the following steps:
- step 1: obliquely inserting the first insertion rib on one side of the first section into the corresponding second groove;
- step 2: with said abovementioned first insertion rib on one side of the first section, pressing the resilient material into the corresponding first groove or second groove until said first section is rotatable relative to said first or second groove, in which case the first ribs and the first grooves on the other side of said first section can be rotated past the second ribs;
- step 3: rotating the first section relative to said first or second groove until the first insertion rib on the other side of said first section is situated at the level of the corresponding second groove;
- step 4: releasing the first section, so that as a result of the resilient material expanding again, the first insertion rib on the other side of the first section is pressed into the corresponding groove.

The procedure can then be reversed in order to detach the abovementioned first section again from the one or more second sections. With the first insertion rib on one side of the first section, the resilient material is pressed into the corresponding first or second groove until said first section is rotatable relative to said first or second groove, in which case the first ribs and the first grooves on the other side of said first section can be rotated past the second ribs. The first section is then rotated relative to said corresponding first or second groove until the first insertion rib on the other side of said first section has rotated beyond the corresponding second insertion rib. This means that the first section is detached and the first section can now be fully removed from the one or more second sections.

This invention will now be explained in greater detail with reference to the detailed description below of a preferred embodiment of a system according to this invention for detachably connecting one or more first sections between two or more connecting parts of one or more second sections, in which the detachable connection between the abovementioned one or more first sections and the abovementioned two or more connecting parts is designed to be resilient. The purpose of this description is purely to give clarifying examples and to indicate further advantages and details of this embodiment of a system for detachably connecting one or more first sections between two or more connecting parts of one or more second sections according to this invention, and it can therefore by no means be interpreted as a limitation of the field of application of the invention or of the patent rights applied for in the claims.

In this detailed description, reference numerals are used to refer to the appended drawings, in which
- ***Figure 1*** shows a diagrammatic cross section of a channel-shaped section and a cover section of a cable duct for an embodiment of a system according to this invention, in which the channel-shaped section and the cover section are not connected to each other;
- ***Figure 2*** shows a diagrammatic cross section of the channel-shaped section and the cover section of Figure 1, in which the channel-shaped section and the cover section are connected to each other.

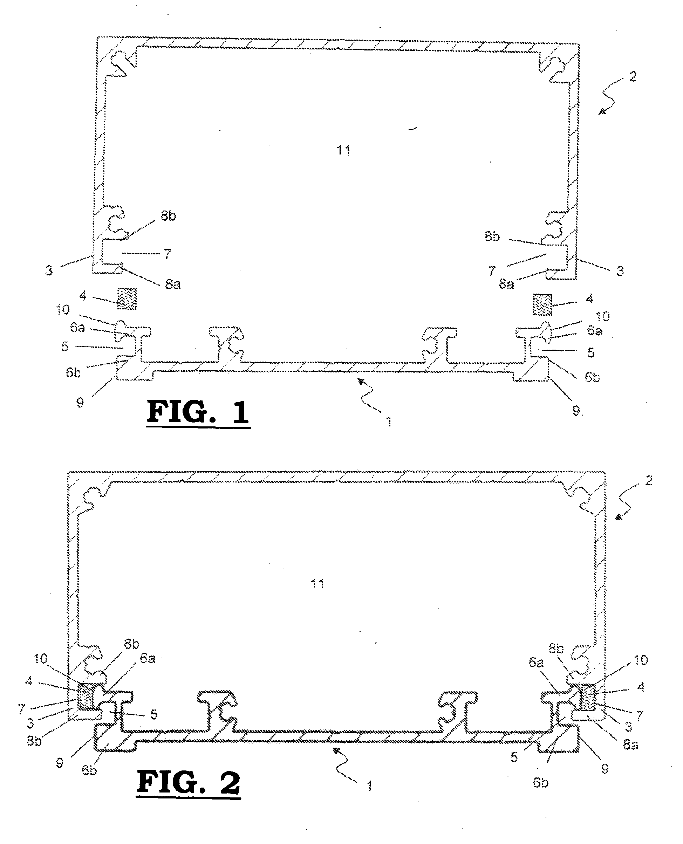

In the preferred embodiment of a system for detachably connecting a cover section (1) between the two connecting parts (3) of a channel-shaped section (2) according to this invention, the connecting parts (3) of the channel-shaped section (2), as illustrated in Figures 1 and 2, are provided with a second insertion rib (8a) and a second stop rib (8b), which together form a second groove (7). The cover section (1) in this preferred embodiment, as illustrated in Figures 1 and 2, is provided on both sides in the longitudinal direction with a first insertion rib (6a) and a first stop rib (6b), which together form a first groove (5). For the sake of clarity, the resilient material (4) is shown loose in Figure 1, but according to this invention it is preferably either fitted so as to be fixedly connected to the cover section (1) in the first grooves (5), or fitted so as to be fixedly connected to the channel-shaped section (2) in the second grooves (7). As is preferable according to this invention, in this embodiment a strip of elastic material (4) is fitted on both sides in the longitudinal direction of the cover section (1), so that the cover section (1) can be fitted so as to be self-centring in the channel-shaped section (2). In order to form the resilient connection, the first insertion ribs (6a) fit into the second grooves (7) and the second insertion ribs (8a) fit into the first grooves (5).

The cover section (1) can be fitted in the channel-shaped section (2) according to the method according to this invention. In order to detach the cover section (1), the procedure is reversed. With the first insertion rib (6a) on the one side of the cover section (1), the resilient material (4) is pressed into the corresponding first groove (5) or second groove (7) until this cover section (1) is rotatable relative to this first groove (5) or second groove (7), in which case the first ribs (6a, 6b) and the first groove (5) on the other side of this cover section (1) can be rotated past the second ribs (8a, 8b). The cover section (1) is then rotated relative to this corresponding first groove (5) or second groove (7) until the first insertion rib (6a) on the other side of this cover section (1) has rotated past the corresponding second insertion rib (8a). This means that the cover section (1) is detached and the cover section (1) can now be removed completely from the one or more channel-shaped sections (2).

In order to ensure that this fitting can be executed smoothly, the head (10) of the first insertion ribs (6a) has been made rounded, so that the tilting movement during insertion or detachment of the cover section can be performed smoothly. In addition, the rounded head (10) ensures that the elastic material (4) is pressed down uniformly in all directions in conformity with said rounded head (10), and the first insertion ribs (6a) can be fitted uniformly centred in the corresponding second grooves (7). During insertion of the cover section (1) into the channel-shaped section (2) the first insertion ribs (6a) knock against the second stop ribs (8b), which are made longer than the second insertion ribs (8a). In this way the insertion of the cover section (1) is not hampered too much, while it cannot simply fall through into the cavity (11) of the channel-shaped section (2). However, the cover section can be deliberately made to fall into the cavity (11) of channel-shaped section (2), since when the elastic material (4) is pressed down completely with a first insertion rib (6a) on one side of the cover section (1), this cover section (1) is rotatable relative to the second groove (7), so that the first ribs (6a, 6b) and the first groove (5) on the other side of this cover section (1) can also be rotated past the corresponding stop rib (8b). In this way it becomes possible to place the cover section (1) fully in the cavity of the channel-shaped section (2), so that for example when transporting cable ducts a considerable amount of space can be gained. After the fitting of the cover section (1) in the channel-shaped section (2) according to the method according to this invention, the cover section (1) is prevented from falling out of, or simply becoming detached from, the channel-shaped section through the fact that the second insertion ribs (8a) knock against the first stop ribs (6b), which are made longer than the first insertion ribs (6a). First ribs (6a, 6b) of the cover section (1) furthermore form an edge that is raised relative to the two connecting parts (3) of the channel-shaped section (2), as gripping means (9) for detaching the resilient connection.

In order to allow ventilation along the resilient connection, the resilient material (4) is preferably made of foamed or extruded material, and in order to obtain a heat-resistant resilient connection, said resilient material (4) is preferably made of heat-resistant material.

If the resilient material (4) is of elastic material (4), the clamping force of the detachable resilient connection can be determined by adjusting the density and the quantity of elastic material (4) that is placed in the longitudinal direction between the various sections (1, 2).

With such resilient connections as those in the proposed preferred embodiments, a lightproof, dustproof, spatterproof and ventilated seal of the cable duct can be obtained as desired.

Owing to the fact that with a system according to this invention the cover section (1) and the channel-shaped section (2) do not need to deform in order to obtain a connection between the two, the choice of material for both has been greatly extended. For instance, both can be made of an aluminium alloy or even of a stone. Aluminium is a light and high-grade material in the case of which a whole range of decorative and/or protective surface treatments is possible.

It is also possible, for example, to install the channel-shaped section (2) in a wall or a desktop and the like, in which case the cover section (1) can still be fitted detachably in the channel-shaped section (2). However, it is, for example, also possible to fit the cover section (1) on a wall, in which case the channel-shaped section (2) can then be fitted detachably on the cover section (1). By then making the channel-shaped section (2) of aluminium, for example, it is ensured that it is easy to paint, and can be finished with the interior of a room. In this way a cable duct can also be used as, for example, a plinth at the same time.

## Claims

1. System for detachably connecting one or more first sections (1) between two or more connecting parts (3) of one or more second sections (2), in which the detachable connection between the abovementioned one or more first sections and the abovementioned two or more connecting parts is made resilient, in which the one or more first sections (1) are provided on both sides in the longitudinal direction with a first insertion rib (6a), and in which the two or more connecting parts (3) of the one or more second sections (2) are provided in the longitudinal direction with a second insertion rib (8a) and a second stop rib (8b) as second ribs which together form a second groove (7), in which the first insertion ribs (6a) fit into the second grooves (7) to form the connection, and in which at least partially resilient material is provided between the one or more first sections (1) and the two or more connecting parts (3) of the one or more second sections (2), **characterized in that** the one or more first sections (1) are provided on both sides in the longitudinal direction with a first stop rib (6b), which together with the first insertion rib (6a) as first ribs form a first groove (5), **in that** the second insertion ribs (8) fit into the first grooves (5) to form the connection, and **in that** the first insertion ribs (6a) are made longer than the first stop ribs (6b), and the second insertion ribs (8a) are made shorter than the second stop ribs (8b) (8a), and **in that** the abovementioned resilient connection is achieved by providing at least partially resilient material (4) in the first grooves (5) or the second grooves (7).

2. System according to Claim 1, **characterized in that** the abovementioned resilient connection is achieved by providing resilient material (4) in the first grooves (5) or the second grooves (7) in the longitudinal direction on both sides of the one or more first sections (1).

3. System according to Claim 1 or 2, **characterized in that** the resilient material (4) consists of a strip of elastic material.

4. System according to one of the preceding claims, **characterized in that** the resilient material (4) is fixedly connected to one or more of the first sections (1) or to one or more of the two or more connecting parts (3) of the one or more second sections (2).

5. System according to one of the preceding claims, **characterized in that** the resilient material (4) is made of foamed or extruded material.

6. System according to one of the preceding claims, **characterized in that** the resilient material (4) is made on the basis of heat-resistant material.

7. System according to one of the preceding claims, **characterized in that** the first insertion ribs (6a) are provided with a rounded head (10).

8. System according to one of the preceding claims, **characterized in that** the first ribs (6a, 6b), the first grooves (5), the second ribs (8a, 8b) and the second grooves (7) are designed in such a way that on pressing the resilient material (4) with the one side of a first section (1) into a first groove (5) or a second groove (7), said first section (1) is rotatable relative to said first groove (5) or second groove (7), in which case the first ribs (6a, 6b) and the first grooves (5) on the other side of said first section (1) can be rotated past the second ribs (8a, 8b).

9. System according to one of the preceding claims, **characterized in that** gripping means (9) are provided for detaching the resilient connection.

10. System according to Claim 9, **characterized in that** the first ribs (6b) of the one or more first sections (1) form an edge (9) that is raised relative to the two or more connecting parts (3) of the one or more second sections (2), as the gripping means for detaching the resilient connection.

11. System according to one of the preceding claims, **characterized in that** said system is used in a cable duct.

12. System according to one of Claims 1 to 10, **characterized in that** said system is used in a light fitting.

13. Method for connecting a first section (1) between two connecting parts (3) of one or more second sections (2), by means of a system according to Claim 8, **characterized in that** said method comprises the following steps:
- step 1: obliquely inserting the first insertion rib (6a) on one side of the first section (1) into the corresponding second groove (7);
- step 2: with said abovementioned first insertion rib (6a) on one side of the first section (1), pressing the resilient material (4) into the corresponding first groove (5) or second groove (7) until said first section (1) is rotatable relative to said first groove (5) or second groove (7), in which case the first ribs (6a, 6b) and the first grooves (5) on the other side of said first section (1) can be rotated past the second ribs (8a, 8b);
- step 3: rotating the first section (1) relative to said first groove (5) or second groove (7) until the first insertion rib (6a) on the other side of said first section (1) is situated at the level of the corresponding second groove (7);
- step 4: releasing the first section (1), so that as a result of the resilient material (4) expanding again, the first insertion rib (6a) on the other side of the first section (1) is pressed into the corresponding groove (7).

## Patentansprüche

1. System zum lösbaren Verbinden eines oder mehrerer erster Abschnitte (1) zwischen zwei oder mehreren Verbindungsteilen (3) eines oder mehrerer zweiter Abschnitte (2), wobei die lösbare Verbindung zwischen den oben genannten einem oder mehreren ersten Abschnitten und den oben genannten zwei oder mehreren Verbindungsteilen elastisch gebildet ist, wobei der eine oder die mehreren ersten Abschnitte (1) an beiden Seiten in der Längsrichtung mit einer ersten Einführungsrippe (6a) versehen sind, und wobei die zwei oder mehreren Verbindungsteile (3) des einen oder der mehreren zweiten Abschnitte (2) in der Längsrichtung mit einer zweiten Einführungsrippe (8a) und einer zweiten Arretierungsrippe (8b) als zweite Rippen versehen sind, die zusammen eine zweite Nut (7) bilden, wobei die ersten Einführungsrippen (6a) zum Bilden der Verbindung in die zweiten Nuten (7) passen, und wobei wenigstens teilweise elastisches Material zwischen dem ersten oder den mehreren ersten Abschnitten (1) und den zwei oder mehreren Verbindungsteilen (3) des einen oder der mehreren zweiten Abschnitte (2) vorgesehen ist, **dadurch gekennzeichnet, dass** der eine oder die mehreren ersten Abschnitte (1) an beiden Seiten in der Längsrichtung mit einer ersten Arretierungsrippe (6b) versehen sind, welche zusammen mit der ersten Einführungsrippe (6a) als erste Rippen einer ersten Nut (5) bilden, dass die zweiten Einführungsrippen (8) zum Bilden der Verbindung in die ersten Nuten (5) passen, und dass die ersten Einführungsrippen (6a) länger gebildet sind als die ersten Arretierungsrippen (6b) und die zweiten Einführungsrippen (8a) kürzer gebildet sind als die zweiten Arretierungsrippen (8b) (8a), und dass die oben genannte elastische Verbindung durch Vorsehen von wenigstens teilweise elastischem Material (4) in den ersten Nuten (5) oder den zweiten Nuten (7) gebildet ist.

2. System nach Anspruch 1, **dadurch gekennzeichnet, dass** die oben genannte elastische Verbindung durch Vorsehen von elastischem Material (4) in den ersten Nuten (5) oder den zweiten Nuten (7) in der Längsrichtung an beiden Seiten des einen oder der mehreren ersten Abschnitte (1) gebildet ist.

3. System nach Anspruch 1 oder 2, **dadurch gekennzeichnet, dass** das elastische Material (4) aus einem Streifen elastischen Materials besteht.

4. System nach einem der vorangehenden Ansprüche, **dadurch gekennzeichnet, dass** das elastische Material (4) fest mit einem oder mehreren der ersten Abschnitte (1) oder mit einem oder mehreren der zwei oder mehreren Verbindungsteile (3) des einen oder der mehreren zweiten Abschnitte (2) verbunden ist.

5. System nach einem der vorangehenden Ansprüche, **dadurch gekennzeichnet, dass** das elastische Material (4) aus geschäumtem oder extrudiertem Material gebildet ist.

6. System nach einem der vorangehenden Ansprüche, **dadurch gekennzeichnet, dass** das elastische Material (4) auf der Grundlage von wärmeresistentem Material gebildet ist.

7. System nach einem der vorangehenden Ansprüche, **dadurch gekennzeichnet, dass** die ersten Einführungsrippen (6a) mit einem abgerundeten Kopf versehen sind.

8. System nach einem der vorangehenden Ansprüche, **dadurch gekennzeichnet, dass** die ersten Rippen (6a, 6b), die ersten Nuten (5), die zweiten Rippen (8a, 8b) und die zweiten Nuten (7) derart ausgebildet sind, dass, wenn das elastische Material (4) mit der einen Seite eines ersten Abschnitts (1) in eine erste Nut (5) oder eine zweite Nut (7) gedrückt wird, der erste Abschnitt (1) bezüglich der ersten Nut (5) oder zweiten Nut (7) drehbar ist, in welchem Fall die ersten Rippen (6a, 6b) und die ersten Nuten (5) an der anderen Seite des ersten Abschnitts (1) hinter die zweiten Rippen (8a, 8b) gedreht werden können.

9. System nach einem der vorangehenden Ansprüche, **dadurch gekennzeichnet, dass** Greifmittel (9) zum Lösen der elastischen Verbindung vorgesehen sind.

10. System nach Anspruch 9, **dadurch gekennzeichnet, dass** die ersten Rippen (6b) des einen oder der mehreren ersten Abschnitte (1) eine Kante (9) bilden, die im Verhältnis zu den zwei oder mehreren Verbindungsteilen (3) des einen oder der mehreren zweiten Abschnitte (2) als Greifmittel zum Lösen der elastischen Verbindung erhaben ist.

11. System nach einem der vorangehenden Ansprüche, **dadurch gekennzeichnet, dass** das System als Kabelkanal verwendet wird.

12. System nach einem der Ansprüche 1 bis 10, **dadurch gekennzeichnet, dass** das System in einem Beleuchtungskörper verwendet wird.

13. Verfahren zum Verbinden eines ersten Abschnitts (1) zwischen zwei Verbindungsteilen (3) eines oder mehrerer zweiter Abschnitte (2) mittels eines Systems nach Anspruch 8, **dadurch gekennzeichnet, dass** das Verfahren die folgenden Schritte umfasst:
- Schritt 1: schräges Einbringen der ersten Einführungsrippe (6a) an einer Seite des ersten Abschnitts (1) in die entsprechende zweite Nut (7);
- Schritt 2: Drücken des elastischen Materials (4) mit der oben genannten ersten Einführungsrippe (6a) an einer Seite des ersten Abschnitts (1) in die entsprechende erste Nut (5) oder zweite Nut (7) bis der erste Abschnitt (1) bezüglich der ersten Nut (5) oder zweiten Nut (7) drehbar ist, in welchem Fall die ersten Rippen (6a, 6b) und die ersten Nuten (5) an der anderen Seite des ersten Abschnitts (1) hinter die zweiten Rippen (8a, 8b) gedreht werden können;
- Schritt 3: Drehen des ersten Abschnitts (1) bezüglich der ersten Nut (5) oder zweiten Nut (7) bis die erste Einführungsrippe (6a) an der anderen Seite des ersten Abschnitts (1) auf der Höhe der entsprechenden zweiten Nut (7) angeordnet ist;
- Schritt 4: Freigeben des ersten Abschnitts (1), so dass als Folge des erneuten Expandierens des elastischen Materials (4) die erste Einführungsrippe (6a) an der anderen Seite des ersten Abschnitts (1) in die entsprechende Nut (7) gedrückt wird.

## Revendications

1. Système de jonction détachable d'au moins un premier profilé (1) entre au moins deux parties de jonction (3) d'au moins un deuxième profilé (2), la jonction détachable entre ledit au moins un premier profilé et lesdites au moins deux parties de jonction étant souple, ledit au moins un premier profilé (1) étant pourvu des deux côtés dans le sens de la longueur d'une première nervure d'insertion (6a), lesdites au moins deux parties de jonction (3) dudit au moins un deuxième profilé (2) étant pourvues dans le sens de la longueur d'une deuxième nervure d'insertion (8a) et d'une deuxième nervure de butée (8b) formant des deuxièmes nervures et délimitant ensemble une deuxième rainure (7), les premières nervures d'insertion (6a) s'ajustant dans les deuxièmes rainures (7) pour établir la jonction, et un matériau au moins partiellement souple étant placé entre ledit au moins un premier profilé (1) et lesdites au moins deux parties de jonction (3) dudit au moins un deuxième profilé (2),
ledit système étant **caractérisé en ce que** ledit au moins un profilé (1) est pourvu des deux côtés dans le sens de la longueur d'une première nervure de butée (6b) qui, conjointement avec la première nervure d'insertion (6a) en formant des premières nervures, délimitent une première rainure (5), **en ce que** les deuxièmes nervures d'insertion (8) s'ajustent dans les première rainures (5) pour établir la jonction, **en ce que** les premières nervures d'insertion (6a) sont plus longues que les premières nervures de butée (6b) et les deuxièmes nervures d'insertion (8a) sont plus courtes que les deuxièmes nervures de butée (8b) (8a), et **en ce que** ladite jonction souple est obtenue en plaçant un matériau au moins partiellement souple (4) dans les première rainures (5) ou les deuxièmes rainures (7).

2. Système selon la revendication 1, **caractérisé en ce que** ladite jonction souple est obtenue en plaçant un matériau souple (4) dans les premières rainures (5) ou les deuxièmes rainures (7) dans le sens de la longueur des deux côtés dudit au moins un profilé (1).

3. Système selon la revendication 1 ou 2, **caractérisé en ce que** le matériau souple (4) comprend une bande de matériau élastique.

4. Système selon l'une des revendications précédentes, **caractérisé en ce que** le matériau souple (4) est fixé solidement audit au moins un premier profilé (1) ou à au moins une desdites au moins deux parties de jonction (3) dudit au moins un deuxième profilé (2).

5. Système selon l'une des revendications précédentes, **caractérisé en ce que** le matériau souple (4) est formé d'un matériau alvéolaire ou extrudé.

6. Système selon l'une des revendications précédentes, **caractérisé en ce que** le matériau souple (4) est formé à partir d'un matériau résistant à la chaleur.

7. Système selon l'une des revendications précédentes, **caractérisé en ce que** les premières nervures d'insertion (6a) sont pourvues d'une tête arrondie (10).

8. Système selon l'une des revendications précédentes, **caractérisé en ce que** les premières nervures (6a, 6b), les premières rainures (5), les deuxièmes nervures (8a, 8b) et les deuxièmes rainures (7) sont conçues de telle sorte que la compression du matériau souple (4) par un côté d'un premier profilé (1) dans une première rainure (5) ou une deuxième rainure (7) permet la rotation dudit premier profilé (1) par rapport à ladite première rainure (5) ou ladite deuxième rainure (7), auquel cas les premières nervures (6a, 6b) et les premières rainures (5) de l'autre côté dudit premier profilé (1) peuvent subir une rotation au-delà des deuxièmes nervures (8a, 8b).

9. Système selon l'une des revendications précédentes, **caractérisé en ce que** des moyens de saisie (9) permettent de détacher la jonction souple.

10. Système selon la revendication 9, **caractérisé en ce que** les premières nervures (6b) dudit au moins un premier profilé (1) établissent un bord (9) qui est rehaussé par rapport auxdites au moins deux parties de jonction (3) dudit au moins un deuxième profilé (2), le bord (9) formant les moyens de saisie permettant de détacher la jonction souple.

11. Système selon l'une des revendications précédentes, **caractérisé en ce qu'**il est utilisé dans une conduite de câbles.

12. Système selon l'une des revendications 1 à 10, **caractérisé en ce qu'**il est utilisé dans un luminaire.

13. Procédé de jonction d'un premier profilé (1) entre deux parties de jonction (3) d'au moins un deuxième profilé (2), au moyen d'un système selon la revendication 8, ledit procédé étant **caractérisé en ce qu'**il comprend les étapes suivantes :
- étape 1 : insertion oblique de la première nervure d'insertion (6a) d'un côté du premier profilé (1) dans la deuxième rainure (7) correspondante ;
- étape 2 : au moyen de ladite première nervure d'insertion (6a) placée d'un côté du premier profilé (1), compression du matériau souple (4) dans la première rainure (5) ou la deuxième rainure (7) correspondante jusqu'à permettre la rotation dudit premier profilé (1) par rapport à ladite première rainure (5) ou ladite deuxième rainure (7), auquel cas les premières nervures (6a, 6b) et les premières rainures (5) de l'autre côté dudit premier profilé (1) peuvent subir une rotation au-delà des deuxièmes nervures (8a, 8b) ;
- étape 3 : rotation du premier profilé (1) par rapport à ladite première rainure (5) ou ladite deuxième rainure (7) jusqu'à amener la première nervure d'insertion (6a) de l'autre côté dudit premier profilé (1) au niveau de la deuxième rainure (7) correspondante ;
- étape 4 : lâcher le premier profilé (1) de manière à ce que la première nervure d'insertion (6a) de l'autre côté du premier profilé (1) soit comprimée dans la deuxième rainure (7) correspondante sous l'effet de la dilatation du matériau souple (4).
